# EUROPEAN PATENT SPECIFICATION

(11) **EP 3 213 639 B1**
(45) Date of publication and mention of the grant of the patent: **12.02.2020**
(21) Application number: 15854505.3
(22) Date of filing: 02.07.2015
(51) Int. Cl.: A23D 9/00, A23D 9/02

(54) **EXTRACT EMULSIFIED OIL COMPRISING ANTIOXIDANT, EDIBLE OIL CONTAINING SAME, AND PREPARATION METHOD THEREFOR**
EMULGIERTES ÖLEXTRAKT MIT ANTIOXIDANS, SPEISEÖL DAMIT UND HERSTELLUNGSVERFAHREN DAFÜR
EXTRAIT D'HUILE ÉMULSIONNÉE COMPRENANT UN ANTIOXYDANT, HUILE COMESTIBLE CONTENANT CE DERNIER ET PROCÉDÉ DE PRÉPARATION ASSOCIÉ

(30) Priority: 31.10.2014 KR 20140149894
(43) Date of publication of application: 06.09.2017
(73) Proprietor: CJ Cheiljedang Corporation, Seoul 100-400 (KR)
(72) Inventor: LEE, Eun Hye, Suwon -si Gyeonggi-do 16496 (KR); MIN, Keun Young, Suwon-si Gyeonggi-do 16509 (KR); MIN, Bock Ki, Seoul 08655 (KR); LEE, Joo Hang, Ansan-si Gyeonggi-do 426-707 (KR); KIM, Won Chul, Suwon-si Gyeonggi-do 16509 (KR); KIM, Chul Jin, Seoul 08211 (KR); CHO, Jeong Goo, Incheon 404-180 (KR); JUNG, Dong Chul, Seoul 06779 (KR)
(74) Representative: Cabinet Beau de Loménie
(86) International application number: PCT/KR2015/006802
(87) International publication number: WO 2016/068443

(56) References cited:
- WO-A1-2009/013757
- WO-A1-2012/106761
- WO-A1-2013/172348
- WO-A2-2009/088096
- CN-A- 104 082 433
- JP-A- 2010 246 530
- KR-A- 20110 011 365
- THEODORA-IOANNA LAFKA ET AL: "Phenolic Extracts from Wild Olive Leaves and Their Potential as Edible Oils Antioxidants", FOODS, vol. 2, no. 4, 4 January 2013 (2013-01-04) , pages 18-31, XP055450851, DOI: 10.3390/foods2010018
- RADWAN S. FARAG ET AL: "Use crude olive leaf juice as a natural antioxidant for the stability of sunflower oil during heating", INTERNATIONAL JOURNAL OF FOOD SCIENCE AND TECHNOLOGY., vol. 42, no. 1, 1 January 2007 (2007-01-01), pages 107-115, XP055450852, GB ISSN: 0950-5423, DOI: 10.1111/j.1365-2621.2006.01374.x
- LEILA ABAZA ET AL: "Chétoui olive leaf extracts: influence of the solvent type on phenolics and antioxidant activities", GRASAS Y ACEITES, vol. 62, no. 1, 17 February 2011 (2011-02-17), pages 96-104, XP055450854, SPAIN ISSN: 0017-3495, DOI: 10.3989/gya.044710
- TAGHVAEI MOSTAFA ET AL: "Application and stability of natural antioxidants in edible oils in order to substitute synthetic additives", JOURNAL OF FOOD SCIENCE AND TECHNOLOGY, SPRINGER (INDIA) PRIVATE LTD, INDIA, vol. 52, no. 3, 6 July 2013 (2013-07-06), pages 1272-1282, XP035461869, ISSN: 0022-1155, DOI: 10.1007/S13197-013-1080-1 [retrieved on 2013-07-06]
- CARLA M. GUIMARÃES ET AL: "Antioxidant Activity of Sugar Molasses, Including Protective Effect Against DNA Oxidative Damage", JOURNAL OF FOOD SCIENCE, vol. 72, no. 1, 1 January 2007 (2007-01-01), pages C039-C043, XP055450855, US ISSN: 0022-1147, DOI: 10.1111/j.1750-3841.2006.00231.x
- M E ABD-ELGHANY ET AL: "Use of Olive Waste Cake Extract as a Natural Antioxidant for Improving the Stability of Heated Sunflower Oil", WORLD APPLIED SCIENCES JOURNAL, vol. 11, 1 January 2010 (2010-01-01), pages 106-113, XP055450857,
- EMMA CADERBY ET AL: "Sugar Cane Stillage: A Potential Source of Natural Antioxidants", JOURNAL OF AGRICULTURAL AND FOOD CHEMISTRY, vol. 61, no. 47, 14 November 2013 (2013-11-14), pages 11494-11501, XP055450858, ISSN: 0021-8561, DOI: 10.1021/jf4039474
- VERONICA VALLI ET AL: "Sugar Cane and Sugar Beet Molasses, Antioxidant-rich Alternatives to Refined Sugar", JOURNAL OF AGRICULTURAL AND FOOD CHEMISTRY, vol. 60, no. 51, 12 December 2012 (2012-12-12), pages 12508-12515, XP055450859, ISSN: 0021-8561, DOI: 10.1021/jf304416d
- FELIX ADEKUNLE ALADEDUNYE: 'Natural antioxidants as stabilizers of frying oils' EUR. J. LIPID SCI. TECHNOL vol. 116, no. 6, 01 June 2014, pages 688 - 706, XP055438728 DOI: 10.1002/EJLT.201300267

## Description

### BACKGROUND

The present invention relates to an emulsified oil comprising lecithin, an edible oil and one or more extracts containing a polyphenol ingredient as an antioxidant, wherein the one or more extracts is (are) selected from a molasses extract and an extract of raw sugar-ion resin reclaimed water. The invention also relates to a cooking oil containing the same, and to a preparation method thereof.

In general, fried foods have been cooked by putting and frying food materials such as meat, for example, chicken or pork cutlet, and the like, or fishes such as fish cake into frying oil at a high temperature in fast food restaurants, chicken restaurants, snack bars, and the like. Recently, a diet has been westernized, the kind of fried foods has been diversified, and a demand of the fried foods has been increased.

Generally, since vegetable cooking oil used for frying in restaurants is repeatedly used several times, when the vegetable cooking oil is contaminated with animal fat released from chicken, other meat, water, impurities, fatty acid, and the like, to thereby be acidified together with each other, quality of the fried foods is deteriorated due to undesirable color of fried foods, undesirable flavor, generation of toxic materials, and the like. Therefore, after a predetermined period, the used oil is disposed and replaced with fresh cooking oil.

In the case of cooking oil used for frying, an ingredient of a food material, a seasoning, salts, and the like, are melted in the oil to accelerate an rancidification rate of the oil, thereby changing a color value of the oil and a color of fried food, and moisture generated from the food material may also increase a moisture content of the oil. In addition, as the oil is thermally polymerized, thermally decomposed, and oxidized upon heating to increase free fatty acids, an acid value is increased, such that a lifetime of the cooking oil is deteriorated.

The acid value is a method of measuring an rancidification degree of oil or fat, and according to Korean Food Standard Codex, Chapter 7: Standard and Specification for Cooked Food, etc., in Restaurant, and Chapter 3: Cooking and Management Standard, it is recommended that when the acid value of oil or fat is higher than 3.0, the oil or fat is replaced with fresh oil or fat. However, actually, since coloration of the oil or fat is accelerated by impurities generated from the food material, and this coloration of the oil or fat changes a color of the fried food, which deteriorates quality of the fried food, even though the acid value is 3.0 or less, in order to prevent the quality of the fried food from being deteriorated, the oil or fat need to be replaced with fresh oil or fat in fried food restaurants. This causes an increase in price of the fried food, thereby causing problems such as an increase in cost burden to a customer, and environment burden due to an increase in amount of wasted oil in the restaurants.

In order to control color change on heat up, generated due to repetitive use of the cooking oil as described above, it has been suggested a method of enhancing a refining condition for removing phospholipids, Fe, and the like, which are known as materials accelerating aging of oil or fat at the time of heating. However, since currently, refining quality of vegetable cooking oil is reinforced to a high level, if the refining condition is enhanced to the current quality level or more, which increases manufacturing cost of the vegetable cooking oil due to cost of additional sub-ingredients and cost for treating wastes, thereby deteriorating price competitiveness.

Further, in order to solve these problems, a method of filtering used cooking oil using a filter, a method of passing used cooking oil through a porous material such as activated clay, silica gel, or the like, etc. have been suggested (R. Subramanian et al., J Member Sci 187(2001) 57-69). However, since these methods also increase cost, and it is impossible to remove oil or fat polymers generated at the time of heating, these methods are not enough to solve these problems.

Further, in order to prepare cooking oil of which oxidation stability is improved, it has been suggested a preparation method for cooking oil capable of improving oxidation stability by mixing a substance containing lipo-soluble ingredients (tocopherol) and water-soluble ingredients (catechin and polyphenol) extracted from green tea leaves (KR 2009-0118341), and it has been suggested a preparation method for cooking oil for frying and raw eating capable of improving oxidation stability by mixing a small amount of an anti-oxidant (soybean lecithin (0.1 to 1%), polyphenol (0.01 to 1%) extracted from green tea leaves, and propyl gallate (0 to 0.1%))(JP 1990-069142). However, whether or not the used oil or fat is replaced with fresh oil or fat in fried food restaurants, is determined by a degree of coloration by the used oil or fat which causes a change in color of a fried food and deteriorates a quality of the fried food, rather than by an acid value or peroxide value.

CN 104082433A discloses a method for preparing soybean oil comprising tea polyphenol as antioxidant. WO 2009/013757 discloses a process for preparing an edible oil comprising adding a diacylglycerol-containing oil or fat to an oil-containing raw material. Lafka et al. (Foods 2013, 2(4), 18-31) is a study to determine phenol extraction conditions from wild olive tree leaves using various solvents, as well as the potential of the phenolic extracts as edible oils antioxidants. Farag et al. (International Journal of Food Science and technology 2007, 42(1), 107-115) is a study on the effect of crude olive leaf juice as an antioxidant for the stability of sunflower oil during heating. Abd-ElGhany et al. (World Applied Sciences Journal 2010, 11(1), 106-113) is a study on the efficacy of olive waste cake extract to protect sunflower oil against oxidative deterioration during heating. A study providing an overview of the literature on natural antioxidants, their sources and their performance under frying conditions, is disclosed in the European Journal of Lipid Science and Technology (2014, 116(6), 688-706).

### BRIEF SUMMARY OF THE INVENTION

The present invention provides an emulsified oil capable of controlling rancidification of oil or fat, particularly coloration, generated at the time of heat cooking to suppress a quality of fried foods from being deteriorated, and capable of extending a replacement cycle of cooking oil, a cooking oil containing the same, and a preparation method therefor.

According to an embodiment of the present invention, there is provided an emulsified oil comprising lecithin, an edible oil and one or more extracts containing a polyphenol ingredient as an antioxidant, wherein the one or more extracts containing a polyphenol ingredient is (are) selected from the group consisting of a molasses extract and an extract of raw sugar-ion resin reclaimed water.

According to another embodiment of the present invention, there is provided a cooking oil containing soybean oil and from 10 to 1,000ppm of the emulsified oil of the invention.

According to another embodiment of the present invention, there is provided a method for the preparation of an emulsified oil of the invention, including: separating, refining, and concentrating a polyphenol ingredient from molasses or raw sugar-ion resin reclaimed water to obtain an extract; and mixing lecithin and an edible oil with the molasses extract, or the extract of raw sugar-ion resin reclaimed water, to prepare the emulsified oil.

### DETAILED DESCRIPTION OF THE ILLUSTRATED EMBODIMENTS

Hereinafter, the present invention will be described in more detail. Since contents not described in the present specification may be sufficiently recognized and inferred by those skilled in the art or similar art, a description thereof will be omitted.

An embodiment of the present invention relates to an emulsified oil comprising lecithin, an edible oil and one or more extracts containing a polyphenol ingredient as an antioxidant, wherein the one or more extracts containing a polyphenol ingredient is (are) selected from a molasses extract and an extract of raw sugar-ion resin reclaimed water.

Another embodiment of the present invention relates to a method for the preparation of an emulsified oil as defined above, including: separating, refining, and concentrating a polyphenol ingredient from molasses or raw sugar-ion resin reclaimed water to obtain an extract; and mixing lecithin and an edible oil with the molasses extract, or the extract of raw sugar-ion resin reclaimed water, to prepare the emulsified oil.

In detail, the emulsified oil comprising one or more extracts containing a polyphenol ingredient as an antioxidant may be prepared by adding lecithin to the extract obtained by extracting the polyphenol ingredient from the molasses (hereinafter, the molasses extract), or the extract obtained by extracting the polyphenol ingredient from the raw sugar-ion resin reclaimed water (hereinafter, the extract of raw sugar-ion resin reclaimed water), respectively, and emulsifying the mixture in the edible oil.

Therefore, the preparation method for the emulsified oil according to the present invention may include separating and obtaining the polyphenol ingredient from the molasses and the raw sugar-ion resin reclaimed water. The polyphenol ingredient may be obtained from the molasses and the raw sugar-ion resin reclaimed water, using an adsorption resin.

In the present invention, the molasses is a collective term for a liquid containing sucrose produced as a by-product at the time of preparing sugar, and it is difficult to additionally recover sugar from molasses. Generally referred molasses means a residual liquid (mother liquid) obtained by separating sugar from massecuite (a mixture of sugar crystal and the mother liquid, obtained by boiling the raw sugar in a vacuum crystallizer) at the time of preparing refined sugar, molasses-free sugar, and beet sugar. The molasses is referred to as first molasses, second molasses, and final molasses depending on their kinds. Since the molasses may be edible as it is, unlike blackstrap molasses, the molasses is referred to as edible molasses. Generally, the molasses, which is a light-yellow transparent and viscous sugar solution, is composed of water (20 to 30%), a sugar ingredient (60 to 70%, in which sucrose (20 to 30%) and reducing sugar (30 to 50%) are contained), ash (5 to 10%), and organic non-sugar ingredients (2 to 3%).

The raw sugar-ion resin reclaimed water is a solution obtained by separating useful ingredients such as minerals, vitamins, cellulose, polyphenol, and the like, contained in raw sugar and adsorbed in an ion resin process, which is one of the sugar refining processes, with 7 to 10% (w/v) NaCl solution. In a general sugar industry, at the time of preparing refined sugar from raw sugar, in order to remove the useful ingredients such as minerals, vitamins, cellulose, polyphenol, and the like, the raw sugar is sequentially subjected to a lime clarification process, an activated carbon process, and an ion resin process, thereby preparing refined sugar in final crystallization equipment. As the ion resin, a strong base anion resin having a Cl substituent is used, and the polyphenol ingredient derived from the raw sugar is adsorbed in the ion resin, and the adsorbed polyphenol ingredient is separated with 7 to 10% (w/v) NaCl solution, and the used ion resin is recycled.

Generally, polyphenol is a kind of phenol compound in plant containing phenolic hydroxyl (OH) groups, which is formed by photosynthesis of the plant. Polyphenol is a molecular substance composed of two or more phenol molecules, and does not have toxicity unlike benzene and phenol. Polyphenol has an aromatic ring substituted with one or two or more hydroxyl groups, and these hydroxyl groups supply hydrogen atoms to reactive free radicals to form stable non-radicals, thereby removing active oxygen to exhibit an anti-oxidant effect. Polyphenol may be discovered in most plants, and it is known that plants produce polyphenol in order to protect themselves from UV, active oxygen, predators, and the like. Since the phenolic hydroxyl group has a function of removing active oxygen, polyphenol is an ingredient having an anti-oxidant effect. In a human body, active oxygen serves to remove bacteria or virus invaded from the outside but in the case in which the active oxygen is increased more than needs in the body due to various causes such as stress, smoking, UV, and the like, the active oxygen is harmful to the human body. At this time, the polyphenol ingredient having the anti-oxidant effect enters the body, the polyphenol is expected to have effects such as prevention of various diseases, an anti-aging effect, and the like, by removing the active oxygen. Particularly, since polyphenol has an excellent electron donating ability to exhibit a similar effect to that of super oxide dimustase (SOD) to thereby suppress oxidation, polyphenol may prevent aging of the skin, improve flexibility of the skin, have an excellent whitening function of the skin, be hypoallergenic to the skin, and have an effect of inhibiting against acne bacteria, such that polyphenol is also used as an effective cosmetic raw material.

In the present invention, the polyphenol ingredient contained in the molasses extract or the raw sugar-ion resin extract, is contained in the edible oil as anti- oxidant, thereby making it possible to improve color value stability of the cooking oil upon heating to suppress a quality of the fried food from being deteriorated and extend a replacement cycle of the cooking oil.

The process for obtaining the molasses extract may include: diluting the molasses using water to have a brix of 60 in order to secure flowability by decreasing the brix of the molasses so as to easily separate the polyphenol ingredient; passing the diluted molasses solution through a column filled with an adsorption resin to adsorb the polyphenol ingredient of the molasses; recovering the adsorbed polyphenol ingredient of the molasses using 60% (v/v) ethanol; and concentrating a recovered polyphenol ingredient solution of the molasses to obtain a final molasses extract.

The process for obtaining the extract of raw sugar-ion resin reclaimed water may include: passing a raw sugar-ion resin reclaimed water solution through a column filled with an adsorption resin to adsorb the polyphenol ingredient of the raw sugar-ion resin reclaimed water; recovering the adsorbed polyphenol ingredient of the raw sugar-ion resin reclaimed water using 60% (v/v) ethanol; and concentrating a recovered polyphenol ingredient solution of the raw sugar-ion resin reclaimed water to obtain a final extract of raw sugar-ion resin reclaimed water.

More specifically, in the obtained molasses extract and the extract of raw sugar-ion resin reclaimed water, a total content of polyphenol may be 5,000 to 20,000ppm, more specifically, 10,000 to 20,000ppm.

Since the polyphenol ingredient extracted from the molasses, the raw sugar-ion resin reclaimed water, or the olive leaf according to embodiments of the present invention, is water-soluble, in the case of directly mixing the polyphenol ingredient with the edible oil, dispersion stabilization of the polyphenol is impossible. Therefore, for dispersion stabilization of the polyphenol ingredient in the edible oil, an emulsifier is required, and as a non-restrictive example of the emulsifier used in the present invention, there is edible lecithin used as an emulsifier in various foods.

The edible lecithin is a mixture of phospholipid ingredients containing mainly lecithin or cephalins obtained in a soybean oil refining process, and representatively, the lecithin is generally contained in a form of phospholipids in soybean raw oil at a content of about 2% (v/v) or so. In addition, examples of the edible lecithin may include vegetable lecithin such as non-genetically modified organism (non-GMO) soybean lecithin, rapeseed lecithin, sunflower lecithin, canola lecithin, corn lecithin, or the like, and animal lecithin such as egg white lecithin, or the like. Further, it may also be used nature-derived crude lecithin or lecithin refined at a high purity (refined lecithin) obtained by removing impurities such as neutral lipid, fatty acid, carbohydrate, protein, inorganic salts, sterol, pigment, and the like, from unrefined lecithin. Any of them may be used, and the example of the edible lecithin includes enzymatically decomposed lecithin (enzyme lecithin).

It is known that lecithin is effective in preventing oil used for heat cooking , particularly, baking or roasting from being splashed and in removing a bad smell generated at the time of heating (Japanese Patent Nos. 05174293 and 03122264). Further, it is known that lecithin is also effective in decreasing an oil ingredient in fried foods. However, in the case of foods repetitively fried for a long period of time, there is a problem in that coloration of the cooking oil may be accelerated, a use amount thereof needs to be carefully determined.

The edible oil used in the present invention is not limited to soybean oil, but includes vegetable edible oil generally used for frying, for example, canola oil, corn oil, olive oil, sunflower oil, rice bran oil, or the like. The edible oil also includes a mixed oil of one or two or more oils.

The emulsified oil is prepared so as to have a composition containing 5 to 19% (w/w) of molasses extract, 1 to 5 % (w/w) of lecithin, and 80 to 90 %(w/w) of edible oil.

The emulsified oil is prepared to have a composition containing 5 to 19% (w/w) of the extract of raw sugar-ion resin reclaimed water, 1 to 5 % (w/w) of lecithin, and 80 to 90 %(w/w) of edible oil.

In the present invention, the emulsified oil may be obtained by stirring the extract, the lecithin, and the edible oil using a ball mill (AV-1, manufactured by Iuchi) and silicon nitride (Si₃N₄) ceramic balls (5mm) at 50 rpm for 20 hours.

In the preparation method for the extract emulsified oil as described above, there is no need to perform a complicated process, as compared to a method of enhancing a refining condition for removing phospholipids, Fe, and the like, which are known as material accelerating rancidification of the cooking oil at the time of heating and a method of filtering the cooking oil using a filter or passing the cooking oil through a porous material such as activated clay, silica gel, or the like, etc., such that coloration of the cooking oil may be simply and cheaply prevented.

Another embodiment of the present invention relates to a cooking oil containing the emulsified oil according to the embodiments of the present invention.

Another embodiment of the present invention relates to a method for the preparation of the emulsified oil according to the embodiments of the present invention, the method being as defined in claims 6 to 9.

Still another embodiment of the present invention relates to a preparation method for a cooking oil containing the emulsified oil according to the embodiments of the present invention.

In detail, the cooking oil containing the emulsified oil may be prepared by adding the emulsified oil prepared according to the preparation method for an emulsified oil, to a general edible oil.

The general edible oil is not limited to the soybean oil, but vegetable cooking oil such as canola oil, corn oil, olive oil, sunflower oil, rice bran oil, or the like, may be used, without being limited thereto.

As a specific embodiment, the cooking oil containing an emulsified oil may be prepared by adding the emulsified oil prepared according to the present invention to soybean oil in a range of 10 to 1,000ppm.

As another specific embodiment, the cooking oil containing an emulsified oil may be prepared by adding the emulsified oil prepared according to the present invention to canola oil in a range of 10 to 2,000ppm.

A method for adding the extract emulsified oil to the edible oil is not limited, and a general used addition method may be used. As a non-restrictive example, the cooking oil containing an extract emulsified oil may be prepared by adding 3g of extract emulsified oil to 3kg of soybean oil and stirring the mixed oil at 4000 rpm for 30 minutes using a homomixer (T. K. Homomixer Mark II F Model, manufactured by Tokushu Kika Kogyo Co., ltd.).

The preparation method for a cooking oil as described above has an advantage in that it is possible to provide a cooking oil capable of extending a replacement cycle thereof by controlling the coloration upon heating and maintaining a quality of fried food, that is, capable of having excellent thermal stability of undesirable color.

Hereinafter, the present invention will be described in more detail through specific Examples, but these Examples are only to illustrate the present invention, and a scope of the present invention is not limited to these Examples.

### Example

### Preparation Example 1

A molasses extract was prepared as follows.

First, a brix of molasses (CJ CheilJedang, first manufacturing factory located in Incheon) was adjusted to 60 using water, and a polyphenol ingredient in the molasses was adsorbed by passing the molasses solution through an adsorption resin (PAD900, Purolite, U.K.) at a temperature of 40°C and a space velocity (SV) of 1 (feed volume(L)/time (Hr)/resin volume(L)).

After the adsorbed polyphenol ingredient was separated and recovered using 60% (v/v) ethanol under conditions of a temperature of 40°C , a space velocity (SV) of 1 (feed volume(L)/time (Hr)/resin volume(L)), and a bed volume of 5 (feed volume(L)/ resin volume(L)), the recovered polyphenol ingredient was concentrated so that a total content of the polyphenol ingredient measured by a Folin-Ciocalteu Colorimetric method was 9,000 to 10,000 ppm, thereby obtaining the molasses extract.

### Preparation Example 2

An extract of raw sugar-ion resin reclaimed water was prepared as follows.

First, a polyphenol ingredient of raw sugar-ion resin reclaimed water was adsorbed by passing the raw sugar-ion resin reclaimed water (CJ CheilJedang, first manufacturing factory located in Inchon) through an adsorption resin (PAD610, Purolite, U.K.) at a temperature of 40°C and a space velocity (SV) of 3 (feed volume(L)/time (Hr)/resin volume(L)).

After the adsorbed polyphenol ingredient was separated and recovered using 60% (v/v) ethanol under conditions of a temperature of 40°C , a space velocity (SV) of 1 (feed volume(L)/time (Hr)/ resin volume(L)), and a bed volume of 5 (feed volume(L)/ resin volume(L)), the recovered polyphenol ingredient was concentrated so that a total content of the polyphenol ingredient measured by a Folin-Ciocalteu colorimetric method was 9,000 to 10,000 ppm, thereby obtaining the extract of raw sugar-ion resin reclaimed water.

### Example 1

The molasses extract obtained in Preparation Example 1, refined soybean oil (product name: Happyspoon soybean oil, CJ CheilJedang) prepared by a general refining process, and soybean lecithin (product name: Solec™ 2F-UB TN, Standard Soy Lecithin Fluid, manufactured by Solae and imported and sold by Seyang Trading) were mixed with each other so as to have a composition containing 86% (w/w) of soybean oil, 2 % (w/w) of lecithin, and 12% (w/w) of molasses extract, and stirred using a ball mill (AV-1, manufactured by Iuchi) and silicon nitride (Si₃N₄) ceramic balls (5mm) at 50 rpm for 20 hours, thereby preparing a extract emulsified oil of molasses.

The prepared extract emulsified oil of molasses was added to soybean oil at a content of 1,000ppm, and stirred at 4,000 rpm for 30 minutes using a homomixer (T. K. Homomixer Mark II F Model, manufactured by Tokushu Kika Kogyo Co., ltd.), thereby preparing a cooking oil containing an extract emulsified oil suppressing coloration upon heating. Then, after 200g of a cooking oil containing an extract emulsified oil was put into a 500mL round flask, the flask was put on a round flask type heating mantle (MS-DM603, manufactured by Misung Scientific Co., ltd.), and an acid value and a color value of the cooking oil were measured by collecting the cooking oil after 8, 16, 24, 32, 40, 48, and 56 hours from the start of heating while heating the flask at 200°C for 56 hours.

At this time, the acid value of the cooking oil were measured according to Food Ingredient Test Method in (1.1.5.3 Acid Value, 2013, Korean Food Industry Association) in Korean Food Standard Codex, and the color value thereof was measured by Lovibond colorimetry using a 1-inch cell and represented by a 10R+Y value.

### Example 2

The extract of raw sugar-ion resin reclaimed water obtained in Preparation Example 2, refined soybean oil (product name: Happyspoon soybean oil, CJ CheilJedang) prepared by a general refining process, and soybean lecithin (product name: Solec™ 2F-UB TN, Standard Soy Lecithin Fluid, manufactured by Solae and imported and sold by Seyang Trading) were mixed with each other so as to have a composition containing 86% (w/w) of soybean oil, 2% (w/w) of lecithin, and 12% (w/w) of extract of raw sugar-ion resin reclaimed water, and stirred using a ball mill (AV-1, manufactured by Iuchi) and silicon nitride (Si₃N₄) ceramic balls (5mm) at 50 rpm for 20 hours, thereby preparing an extract emulsified oil of raw sugar-ion resin reclaimed water.

The prepared extract emulsified oil of raw sugar-ion resin reclaimed water was added to soybean oil at a content of 1,000ppm, and stirred at 4,000 rpm for 30 minutes using a homomixer (T. K. Homomixer Mark II F Model, manufactured by Tokushu Kika Kogyo Co., ltd.), thereby preparing a cooking oil containing an extract emulsified oil suppressing coloration upon heating. Then, after 200g of a cooking oil containing the extract emulsified oil was put into a 500mL round flask, the flask was put on a round flask type heating mantle (MS-DM603, manufactured by Misung Scientific Co., ltd.), and an acid value and a color value of the cooking oil were measured by collecting the cooking oil after 8, 16, 24, 32, 40, 48, and 56 hours from the start of heating while heating the flask at 200°C for 56 hours.

At this time, the acid value of the cooking oil were measured according to Food Ingredient Test Method (1.1.5.3 Acid Value, 2013, Korean Food Industry Association) in Korean Food Standard Codex, and the color value thereof was measured by Lovibond colorimetry using a 1-inch cell and represented by a 10R+Y value.

### Example 3

Refined soybean oil (product name: Happyspoon soybean oil, CJ CheilJedang) prepared by a general refining process, soybean lecithin (product name: Solec™ 2F-UB TN, Standard Soy Lecithin Fluid, manufactured by Solae and imported and sold by Seyang Trading), and a commercial olive leaf extract (product name: Olea Olive Leaf Extract, Olive Leaf Australia Pty product, imported and sold by AjuPharm Co., ltd.) were mixed with each other so as to have a composition containing 50 % (w/w) of soybean oil, 2 % (w/w) of lecithin, and 48 % (w/w) of olive leaf extract, and stirred using a ball mill (AV-1, manufactured by Iuchi) and silicon nitride (Si₃N₄) ceramic balls (5mm) at 50 rpm for 20 hours, thereby preparing an extract emulsified oil of olive leaf.

The prepared extract emulsified oil of olive leaf was added to soybean oil at a content of 1,000ppm, and stirred at 4,000 rpm for 30 minutes using a homomixer (T. K. Homomixer Mark II F Model, manufactured by Tokushu Kika Kogyo Co., ltd.), thereby preparing a cooking oil containing an extract emulsified oil suppressing coloration upon heating. Then, after 200g of a cooking oil containing an extract emulsified oil was put into a 500mL round flask, the flask was put on a round flask type heating mantle (MS-DM603, manufactured by Misung Scientific Co., ltd.), and an acid value and a color value of the cooking oil were measured by collecting the cooking oil after 8, 16, 24, 32, 40, 48, and 56 hours from the start of heating while heating the flask at 200°C for 56 hours.

In addition, an emulsified oil prepared so as to have a composition containing 74 % (w/w) of soybean oil, 2 % (w/w) of lecithin, and 24 % (w/w) of olive leaf extract was added to soybean oil at a content of 1,000ppm, and the same test was performed thereon by the method described above.

Further, an emulsified oil prepared so as to have a composition containing 26 % (w/w) of soybean oil, 2 % (w/w) of lecithin, and 72 % (w/w) of olive leaf extract was added to soybean oil at a content of 1,000ppm, and the same test was performed thereon by the method described above. However, the cooking oil having the content suggested in the Example of the present invention had the most remarkable effect.

At this time, the acid value of the cooking oil were measured according to Food Ingredient Test Method (1.1.5.3 Acid Value, 2013, Korean Food Industry Association) in Korean Food Standard Codex, and the color value thereof was measured by Lovibond colorimetry using a 1-inch cell and represented by a 10R+Y value.

### Example 4

Refined canola oil (product name: Beksul canola oil, CJ CheilJedang) prepared by a general refining process, soybean lecithin (product name: Solec™ 2F-UB TN, Standard Soy Lecithin Fluid, manufactured by Solae and imported and sold by Seyang Trading), and a commercial olive leaf extract (product name: Olea Olive Leaf Extract, Olive Leaf Australia Pty product, imported and sold by AjuPharm Co., ltd.) were mixed with each other so as to have a composition containing 50 % (w/w) of canola oil, 2 % (w/w) of lecithin, and 48 % (w/w) of olive leaf extract, and stirred using a ball mill (AV-1, manufactured by Iuchi) and silicon nitride (Si₃N₄) ceramic balls (5mm) at 50 rpm for 20 hours, thereby preparing an extract emulsified oil of olive leaf.

The prepared extract emulsified oil of olive leaf was added to canola oil at a content of 1,000ppm, and stirred at 4,000 rpm for 30 minutes using a homomixer (T. K. Homomixer Mark II F Model, manufactured by Tokushu Kika Kogyo Co., ltd.), thereby preparing a cooking oil containing an extract emulsified oil suppressing coloration upon heating. Then, after 200g of a cooking oil containing an extract emulsified oil was put into a 500mL round flask, the flask was put on a round flask type heating mantle (MS-DM603, manufactured by Misung Scientific Co., ltd.), and an acid value and a color value of the cooking oil were measured by collecting the cooking oil after 8, 16, 24, 32, 40, and 48 hours from the start of heating while heating the flask at 200°C for 48 hours.

At this time, the acid value of the cooking oil were measured according to Food Ingredient Test Method (1.1.5.3 Acid Value, 2013, Korean Food Industry Association) in Korean Food Standard Codex, and the color value thereof was measured by Lovibond colorimetry using a 1-inch cell and represented by a 10R+Y value.

### Example 5

Refined soybean oil (product name: Happyspoon soybean oil, CJ CheilJedang) prepared by a general refining process, soybean lecithin (product name: Solec™ 2F-UB TN, Standard Soy Lecithin Fluid, manufactured by Solae and imported and sold by Seyang Trading), and a commercial green tea leaf extract (product name: DS-ETP100, Doosan Biotech Co., ltd.) were mixed with each other so as to have a composition containing 50 % (w/w) of soybean oil, 2 % (w/w) of lecithin, and 48 % (w/w) of green tea leaf extract, and stirred using a ball mill (AV-1, manufactured by Iuchi) and silicon nitride (Si₃N₄) ceramic balls (5mm) at 50 rpm for 20 hours, thereby preparing a extract emulsified oil of green tea leaf.

The prepared extract emulsified oil of green tea leaf was added to soybean oil at a content of 1,000ppm, and stirred at 4,000 rpm for 30 minutes using a homomixer (T. K. Homomixer Mark II F Model, manufactured by Tokushu Kika Kogyo Co., ltd.), thereby preparing a cooking oil containing an extract emulsified oil suppressing coloration upon heating. Then, after 200g of a cooking oil containing an extract emulsified oil was put into a 500mL round flask, the flask was put on a round flask type heating mantle (MS-DM603, manufactured by Misung Scientific Co., ltd.), and an acid value and a color value of the cooking oil were measured by collecting the cooking oil after 8, 16, 24, 32, 40, 48, and 56 hours from the start of heating while heating the flask at 200°C for 56 hours.

At this time, the acid value of the cooking oil were measured according to Food Ingredient Test Method (1.1.5.3 Acid Value, 2013, Korean Food Industry Association) in Korean Food Standard Codex, and the color value thereof was measured by Lovibond colorimetry using a 1-inch cell and represented by a 10R+Y value.

### Example 6

A frying test was performed by coating raw chicken with a batter to cook the raw chicken using the cooking oil containing the extract emulsified oil of olive leaf obtained in Example 3.

As the raw chicken, chicken wing (product name: ChoiceL chicken upper wing, ChoiceL chicken lower wing, manufactured by Harim Co., Ltd.) was used, and the batter was prepared using all-purpose flour. In detail, the batter was prepared by adding 110g of water to 100g of all-purpose flour, 16.5g of the prepared batter was added to 125g of raw chicken to knead dough so that the batter was uniformly coated on a surface of the raw chicken, 8kg of the cooking oil containing the extract emulsified oil of olive leaf was added into a 10L fryer and heated at 175°C for 8 hours per day, and 3.33kg of the raw chicken coated with the batter was fried. This process was repeatedly performed for 6 days, the cooking oil was collected after 8, 16, 24, 32, 40, and 48 hours from the start of frying, and a color value of the collected cooking oil was measured.

At this time, the color value of the cooking oil were measured by Lovibond colorimetry using a 1-inch cell and represented by a 10R+Y value.

### Comparative Example 1

Results obtained by performing a heating test using soybean oil containing an extract emulsified oil obtained using a molasses extract, and a general refined soybean oil (product name: Happyspoon soybean oil, CJ CheilJedang) as in Example 1, were illustrated in the following Table 1.

**[Table 1]**

| Classification | Heating Time | Acid Value | Color Value |
|---|---|---|---|
| General refined soybean oil | 0 | 0.055 | 3.3 |
| | 8 | 0.120 | 4.1 |
| | 16 | 0.210 | 7.3 |
| | 24 | 0.281 | 12.9 |
| | 32 | 0.421 | 24.0 |
| | 40 | 0.701 | 40.0 |
| | 48 | 1.052 | 79.0 |
| | 56 | 1.700 | 140.0 |
| Soybean oil containing extract emulsified oil of molasses | 0 | 0.052 | 3.4 |
| | 8 | 0.120 | 4.1 |
| | 16 | 0.175 | 7.1 |
| | 24 | 0.237 | 10.8 |
| | 32 | 0.351 | 17.4 |
| | 40 | 0.557 | 26.0 |
| | 48 | 0.842 | 45.0 |
| | 56 | 1.403 | 98.0 |

As illustrated in Table 1, in the case of the soybean oil containing the extract emulsified oil of molasses according to the present invention, as a heating time was increased, both of the acid value and the color value were lower than those of the general refined soybean oil. Particularly, the color value of the general refined soybean oil was about 1.5 times higher than that of the soybean oil containing the extract emulsified oil of molasses. Therefore, it may be appreciated that the cooking oil according to the present invention had an excellent effect of improving oxidation stability and suppressing discoloration.

### Comparative Example 2

Results obtained by performing a heating test using soybean oil containing an extract emulsified oil obtained using an extract of raw sugar-ion resin reclaimed water, and a general refined soybean oil (product name: Happyspoon soybean oil, CJ CheilJedang) as in Example 2, were illustrated in the following Table 2.

**[Table 2]**

| Classification | Heating Time | Acid Value | Color Value |
|---|---|---|---|
| General refined soybean oil | 0 | 0.055 | 3.4 |
| | 8 | 0.140 | 4.1 |
| | 16 | 0.198 | 7.5 |
| | 24 | 0.281 | 13.2 |
| | 32 | 0.417 | 21.0 |
| | 40 | 0.657 | 39.0 |
| | 48 | 1.047 | 85.0 |
| | 56 | 1.683 | 140.0 |
| Soybean oil containing extract emulsified oil of raw sugar-ion resin reclaimed water | 0 | 0.055 | 3.4 |
| | 8 | 0.140 | 4.1 |
| | 16 | 0.175 | 7.3 |
| | 24 | 0.252 | 11.1 |
| | 32 | 0.316 | 17.4 |
| | 40 | 0.513 | 29.0 |
| | 48 | 0.772 | 52.0 |
| | 56 | 1.262 | 114.0 |

As illustrated in Table 2, in the case of the soybean oil containing the extract emulsified oil of raw sugar-ion resin reclaimed water according to the present invention, as a heating time was increased, both of the acid value and the color value were lower than those of the general refined soybean oil. Therefore, it may be appreciated that the cooking oil according to the present invention had an excellent effect of improving oxidation stability and suppressing discoloration.

### Comparative Example 3

Results obtained by performing a heating test using soybean oil containing an extract emulsified oil obtained using an olive leaf extract, and a general refined soybean oil (product name: Happyspoon soybean oil, CJ CheilJedang) as in Example 3, were illustrated in the following Table 3.

**[Table 3]**

| Classification | Heating Time | Acid Value | Color Value |
|---|---|---|---|
| General refined soybean oil | 0 | 0.059 | 2.5 |
| | 8 | 0.128 | 4.3 |
| | 16 | 0.196 | 8.9 |
| | 24 | 0.281 | 15.3 |
| | 32 | 0.440 | 26.0 |
| | 40 | 0.701 | 42.0 |
| | 48 | 1.192 | 86.0 |
| | 56 | 1.816 | 130.0 |
| Soybean oil containing extract emulsified oil of olive leaf | 0 | 0.061 | 3.6 |
| | 8 | 0.100 | 4.4 |
| | 16 | 0.182 | 7.8 |
| | 24 | 0.245 | 12.4 |
| | 32 | 0.374 | 18.3 |
| | 40 | 0.561 | 30.0 |
| | 48 | 0.963 | 49.0 |
| | 56 | 1.506 | 90.0 |

As illustrated in Table 3, in the case of the soybean oil containing the extract emulsified oil of olive leaf according to the present invention, as a heating time was increased, both of the acid value and the color value were significantly lower than those of the general refined soybean oil. Therefore, it may be appreciated that the cooking oil according to the present invention had an excellent effect of improving oxidation stability and suppressing discoloration.

### Comparative Example 4

Results obtained by performing a heating test using canola oil containing an extract emulsified oil obtained using an olive leaf extract, and a General refined canola oil (product name: Beksul canola oil, CJ CheilJedang) as in Example 4, were illustrated in the following Table 4.

**[Table 4]**

| Classification | Heating Time | Acid Value | Color Value |
|---|---|---|---|
| General refined canola oil | 0 | 0.055 | 3.5 |
| | 8 | 0.119 | 5.6 |
| | 16 | 0.224 | 11.1 |
| | 24 | 0.461 | 25.0 |
| | 32 | 0.846 | 63.0 |
| | 40 | 1.417 | 130.0 |
| | 48 | 1.944 | 164.0 |
| Canola oil containing extract emulsified oil of olive leaf | 0 | 0.055 | 5.6 |
| | 8 | 0.140 | 5.1 |
| | 16 | 0.216 | 8.8 |
| | 24 | 0.373 | 17.1 |
| | 32 | 0.564 | 29.0 |
| | 40 | 0.963 | 48.0 |
| | 48 | 1.375 | 97.0 |

As illustrated in Table 4, in the case of the canola oil containing an extract emulsified oil of olive leaf according to the present invention, as a heating time was increased, both of the acid value and the color value were significantly lower than those of the General refined canola oil. As compared to the result in Comparative Example 3, the acid value and the color value were slightly high, but this result depends on a difference in the kind of oils between canola oil and soybean oil, the fact was not changed that the extract emulsified oil comprising an antioxidant and the cooking oil according to the present invention had an excellent effect of improving oxidation stability and suppressing discoloration.

### Comparative Example 5

Results obtained by performing a heating test using soybean oil containing a extract emulsified oil of green tea leaf obtained using a green tea leaf extract, and a general refined soybean oil (product name: Happyspoon soybean oil, CJ CheilJedang) as in Example 5, were illustrated in the following Table 5.

**[Table 5]**

| Classification | Heating Time | Acid Value | Color Value |
|---|---|---|---|
| General refined soybean oil | 0 | 0.069 | 2.5 |
| | 8 | 0.120 | 4.3 |
| | 16 | 0.194 | 8.5 |
| | 24 | 0.281 | 12.5 |
| | 32 | 0.375 | 21.5 |
| | 40 | 0.628 | 37.0 |
| | 48 | 1.036 | 70.0 |
| | 56 | 1.543 | 130.0 |
| Soybean oil containing extract emulsified oil of green tea leaf | 0 | 0.069 | 2.4 |
| | 8 | 0.130 | 4.4 |
| | 16 | 0.197 | 8.6 |
| | 24 | 0.245 | 12.2 |
| | 32 | 0.350 | 19.4 |
| | 40 | 0.631 | 32.0 |
| | 48 | 0.982 | 54.0 |
| | 56 | 1.559 | 117.0 |

As illustrated in Table 5, in the case of the soybean oil containing the extract emulsified oil of green tea leaf, as a heating time was increased, both of the acid value and the color value were slightly lower than those of the general refined soybean oil. Therefore, it may be appreciated that an effect of improving oxidation stability and suppressing discoloration was insufficient as compared to the other extracts investigated in the present invention.

### Comparative Example 6

Results obtained by performing a frying test using soybean oil containing an extract emulsified oil obtained using an olive leaf extract, and a general refined soybean oil (product name: Happyspoon soybean oil, CJ CheilJedang) as in Example 6, were illustrated in the following Table 6.

**[Table 6]**

| Frying Time | Color Value | |
|---|---|---|
| | General refined soybean oil | Soybean oil containing extract emulsified oil of olive leaf |
| 0 | 2.6 | 3.8 |
| 8 | 13.9 | 13.6 |
| 16 | 25.6 | 24.6 |
| 24 | 46.0 | 39.0 |
| 32 | 78.0 | 65.0 |
| 40 | 125.0 | 103.0 |
| 48 | 157.0 | 126.0 |

Referring to Table 6, it was confirmed that a color value of oil or fat obtained after 40 hours in the case of performing a chicken frying test using only the general refined soy bean oil was similar to a color value of the soybean oil containing the extract emulsified oil according to the present invention after 48 hours. Therefore, it may be confirmed that in the case of the soybean oil containing the extract emulsified oil according to the present invention, coloration upon heating was controlled over a long period of time as compared to the general refined soybean oil.

According to the present invention, it is possible to obtain the emulsified oil capable of extending the replacement cycle of the cooking oil by controlling the coloration upon heating and maintaining the quality of fried food, that is, capable of having excellent thermal stability of undesirable color, and the cooking oil containing the same.

## Claims

1. An emulsified oil comprising lecithin, an edible oil and one or more extracts containing a polyphenol ingredient as anti-oxidant, wherein the one or more extracts is (are) selected from the group consisting of a molasses extract and an extract of raw sugar-ion resin reclaimed water; wherein the content of the molasses extract or the extract of raw sugar-ion resin reclaimed water is 5 to 19% (w/w), the content of the edible oil is 80 to 90% (w/w), and a content of the lecithin is 1 to 5% (w/w).

2. The emulsified oil according to claim 1, wherein the content of polyphenol in the extract containing the polyphenol ingredient, is 5,000 to 20,000ppm.

3. The emulsified oil according to claim 1, wherein the edible oil is selected from the group consisting of soybean oil, canola oil, corn oil, olive oil, sunflower oil, and rice bran oil.

4. A cooking oil containing soybean oil and from 10 to 1,000ppm of the emulsified oil of claim 1.

5. A cooking oil containing canola oil and from 10 to 2,000ppm of the emulsified oil of claim 1.

6. A method for the preparation of an emulsified oil as defined in claim 1, the method comprising:
separating, refining, and concentrating a polyphenol ingredient from molasses or raw sugar-ion resin reclaimed water to obtain an extract; and
mixing lecithin and an edible oil with the molasses extract, or with the extract of raw sugar-ion resin reclaimed water, to prepare the emulsified oil.

7. The method according to claim 6, wherein the step of separating and refining the polyphenol ingredient includes adsorbing the polyphenol ingredient by passing through a column filled with an adsorption resin.

8. The method according to claim 7, wherein the step of separating and refining the polyphenol ingredient includes separating the polyphenol ingredient adsorbed in the adsorption resin from the resin, using 30 to 90% (v/v) ethanol.

9. The preparation method according to claim 8, wherein the adsorbing and separating step are performed under conditions of a space velocity (SV) of 0.5 to 10[feed volume(L)/time (Hr)/resin volume(L)], and a bed volume (BV) of 5 to 20 [feed volume(L)/ resin volume(L)].

## Patentansprüche

1. Emulgiertes Öl umfassend Lecithin, ein essbares Öl und einen oder mehrere Extrakt(e) enthaltend einen Polyphenolbestandteil als Antioxidationsmittel, wobei der eine oder die mehreren Extrakt(e) aus der Gruppe ausgewählt ist/sind bestehend aus einem Melasseextrakt und einem Extrakt von aus Rohzucker-Ionenharz zurückgewonnenem Wasser, wobei der Gehalt des Melasseextrakts oder des Extrakts von aus Rohzucker-Ionenharz zurückgewonnenem Wasser 5 bis 19 % (Gew./Gew.) beträgt, der Gehalt des essbaren Öls 80 bis 90 % (Gew./Gew.) beträgt und der Gehalt des Lecithins 1 bis 5 % (Gew./Gew.) beträgt.

2. Emulgiertes Öl nach Anspruch 1, wobei der Gehalt an Polyphenol in dem Extrakt, der den Polyphenolbestandteil enthält, 5.000 bis 20.000 ppm beträgt.

3. Emulgiertes Öl nach Anspruch 1, wobei das essbare Öl aus der Gruppe ausgewählt ist bestehend aus Sojabohnenöl, Rapsöl, Maisöl, Olivenöl, Sonnenblumenöl und Reiskleieöl.

4. Speiseöl enthaltend Sojabohnenöl und 10 bis 1.000 ppm des emulgierten Öls nach Anspruch 1.

5. Speiseöl enthaltend Rapsöl und 10 bis 2,000 ppm des emulgierten Öls nach Anspruch 1.

6. Verfahren zur Herstellung eines emulgierten Öls wie in Anspruch 1 definiert, wobei das Verfahren umfasst:
Trennen, Raffinieren und Konzentrieren eines Polyphenolbestandteils aus Melassen oder aus Rohzucker-Ionenharz zurückgewonnenem Wasser, um einen Extrakt zu erhalten, und
Mischen von Lecithin und einem essbaren Öl mit dem Melasseextrakt oder mit dem Extrakt von aus Rohzucker-Ionenharz zurückgewonnenem Wasser, um das emulgierte Öl herzustellen.

7. Verfahren nach Anspruch 6, wobei der Schritt des Trennens und Raffinierens des Polyphenolbestandteils das Adsorbieren des Polyphenolbestandteils durch Hindurchführen durch eine mit einem Adsorptionsharz gefüllte Säule umfasst.

8. Verfahren nach Anspruch 7, wobei der Schritt des Trennens und Raffinierens des Polyphenolbestandteils das Trennen des Polyphenolbestandteils, der in dem Adsorptionsharz adsorbiert ist, von dem Harz unter Anwendung von 30 bis 90 % (Vol./Vol.) Ethanol umfasst.

9. Herstellungsverfahren nach Anspruch 8, wobei der Adsorbierungs- und Trennungsschritt unter Bedingungen einer Raumgeschwindigkeit (SV) von 0,5 bis 10 [Zufuhrvolumen (L)/Zeit (h)/Harzvolumen (L)] und einem Bettvolumen (BV) von 5 bis 20 [Zufuhrvolumen (L)/Harzvolumen (L)] ausgeführt wird.

## Revendications

1. Huile émulsifiée comprenant de la lécitihine, une huile comestible et un ou plusieurs extraits contenant un ingrédient de polyphénol comme anti-oxydant, dans laquelle le un ou plusieurs extraits est (sont) choisi(s) dans le groupe constitué par un extrait de molasse et un extrait d'eau recyclée provenant du traitement de sucre brut sur une résine échangeuse d'ions, dans laquelle la teneur en extrait de molasse ou en extrait d'eau recyclée provenant du traitement de sucre brut sur une résine échangeuse d'ions est de 5 à 19% (m/m), la teneur en huile comestible est de 80 à 90% (m/m), et la teneur en lécitihine est de 1 à 5% (m/m).

2. Huile émulsifiée selon la revendication 1, dans laquelle la teneur en polyphénol dans l'extrait contenant l'ingédient de polyphénol est de 5 000 à 20 000 ppm.

3. Huile émulsifiée selon la revendication 1, dans laquelle l'huile comestible est choisie dans le groupe constitué de l'huile de soja, l'huile de canola, l'huile de maïs, l'huile d'olive, l'huile de tournesol et l'huile de son de riz.

4. Huile de cuisson contenant de l'huile de soja et de 10 à 1 000 ppm de l'huile émulsifiée selon la revendication 1.

5. Huile de cuisson contenant de l'huile de canola et de 10 à 2 000 ppm de l'huile émulsifiée selon la revendication 1.

6. Procédé de préparation d'une huile émulsifiée telle que définie dans la revendeication, le procédé comprenant :
la séparation, le raffinage et la concentration d'un ingrédient de polyphénol à partir de molasse ou d'eau recyclée provenant du traitement de sucre brut sur une résine échangeuse d'ions pour obtenir un extrait, et
le mélange de lécithin et d'une huile comestible avec l'extrait de molasse ou l'extrait d'eau recyclée provenant du traitement de sucre brut sur une résine échangeuse d'ions, pour préparer l'huile émulsifiée.

7. Procédé selon la revendication 6, dans lequel l'étape de séparation et de raffinage de l'ingrédient de polyphénol comprend l'adsorption de l'ingrédient de polyphénol par passage sur une colonne remplie avec une résine d'adsorption.

8. Procédé selon la revendication 7, dans lequel l'étape de séparation et de raffinage de l'ingrédient de polyphénol comprend la séparation de l'ingrédient polyphénol, adsorbé sur la résine, de la résine, en utilisant de 30 à 90% (v/v) d'éthanol.

9. Procédé de préparation selon la revendication 8, dans lequel les étapes d'adsorption et de séparation sont effectuées dans des conditions de vitesse spatiale (SV) de 0,5 à 10 [volume d'alimentation (L)/temps (h)/volume de résine (L)], et de volume de lit (BV) de 5 à 20 [volume d'alimentation (L)/volume de résine (L)].
